(19) Europäisches Patentamt
European Patent Office
Office européen des brevets

(11) **EP 2 287 116 B1**

(12) **FASCICULE DE BREVET EUROPEEN**

(45) Date de publication et mention
de la délivrance du brevet:
**10.12.2014 Bulletin 2014/50**

(51) Int Cl.:
*C02F 1/28* *(2006.01)*      *C02F 1/00* *(2006.01)*
*D06L 1/10* *(2006.01)*      *C02F 101/30* *(2006.01)*
*C02F 101/36* *(2006.01)*      *C02F 103/16* *(2006.01)*
*C02F 103/30* *(2006.01)*

(21) Numéro de dépôt: **10290379.6**

(22) Date de dépôt: **08.07.2010**

(54) **Dispositif et procédé de traitement des fluides de rejet de nettoyage à sec**

Gerät und Verfahren zur Abwasserbehandlung chemischer Reinigung

Device and process for treating water resulting from dry cleaning

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **15.07.2009 FR 0903472**

(43) Date de publication de la demande:
**23.02.2011 Bulletin 2011/08**

(73) Titulaires:
• **IFP Energies nouvelles
92852 Rueil-Malmaison Cedex (FR)**
• **Diotech
45300 Pithiviers (FR)**

(72) Inventeurs:
• **Buchele, Xavier
78000 Versailles (FR)**
• **Frontard, Jean-Luc
92210 Saint-Cloud (FR)**
• **Thomas, Michel
69003 Lyon (FR)**

(56) Documents cités:
EP-A1- 1 195 185      EP-A2- 1 350 561
WO-A1-03/037806      US-A- 4 196 081
US-A- 4 374 028      US-A- 4 830 755
US-A- 5 674 389      US-A- 5 707 528

**Description**

La présente invention se situe dans le domaine des traitements des rejets, notamment l'épuration des eaux utilisées dans un procédé, par exemple de nettoyage, dans lequel on met en oeuvre des solvants dont l'utilisation est réglementée d'un point de vue rejet. En particulier, la présente invention, décrite dans la suite, concerne un dispositif et son procédé de mise en oeuvre pour l'épuration des eaux de nettoyage à sec de vêtements. Le dispositif décrit peut néanmoins sans difficulté être utilisé pour le traitement d'effluents issus d'autres industries utilisant des solvants organo-halogénés, comme celle notamment du nettoyage, décapage ou dégraissage de pièces métalliques, qui utilisent des solvants organo-halogénés, et notamment organo-chlorés, qui peuvent se retrouver dissous dans les eaux de rejet qu'il convient de traiter avant recyclage ou évacuation.

Le nettoyage à sec des vêtements est réalisé dans des machines à laver des pressings avec un solvant de type organochloré, en général le perchloroéthylène (PCE), de formule chimique $C_2Cl_4$, et de l'eau. À l'issue du cycle de lavage, on récupère, par des étapes de condensation et de décantation, d'une part une phase organique, généralement dense, majoritairement composée de perchloroéthylène, de détergents, de graisses et d'autre part une phase aqueuse dans laquelle du PCE est dissous à l'état de trace, à une concentration de l'ordre de 150 mg/l.

Bien que faible, cette teneur est encore trop élevée aujourd'hui pour autoriser un rejet des eaux résiduelles de pressing sans un traitement complémentaire visant à réduire très sensiblement cette teneur, compte tenu des nouvelles normes environnementales et de la toxicité de ce produit.

Afin de diminuer la teneur en composé chloré dans les eaux de rejets, un certain nombre de procédés ont été décrits par le passé.

On peut citer, par exemple, l'utilisation de la photo-oxydation sur un solide à base notamment d'oxyde de titane $TiO_2$, et sous irradiation ultraviolette, telle que décrit dans le document EP-1195185A1. Selon ce document, le perchloroéthylène contenu dans la phase aqueuse est vaporisé avec de l'air, puis envoyé sur une unité de photo-oxydation qui le décompose notamment en chlore, qui est à son tour capté et transformé en sels non toxiques par réaction avec des agents tels que du sulfite, du silicate, du carbonate de calcium, ou du thiosulfate, du carbonate ou du bicarbonate de sodium, ou encore de la soude caustique ou de l'ammoniaque. Le brevet US-5637212 revendique l'utilisation de cartouches filtrantes remplies, l'une de fibre de coton, l'autre de charbon, au travers desquelles circule l'eau contenant des traces de PCE. Cependant, afin d'éliminer une grande partie du PCE, une étape de re-circulation de l'eau ainsi traitée sur ces cartouches est nécessaire. En fin de cycle, l'eau ainsi purifiée est ensuite vaporisée et la vapeur d'eau est évacuée à l'atmosphère. Le brevet US-5525213 décrit un système de traitement des eaux résiduaires de pressing, consistant d'abord en un passage de cette eau sur un filtre contenant notamment du charbon actif, puis à la vaporisation et à la condensation de l'eau ainsi purifiée pour produire de l'eau distillée qui peut ensuite être réutilisée ou évacuée. Le document WO99/07644 décrit un système de traitement des eaux résiduaires qui consiste tout d'abord à stripper, avec un bullage d'air, le solvant dissous dans l'eau, puis à purifier cette eau par passage sur une cartouche contenant du charbon actif. Le document EP-1375432A1 décrit quant à lui l'utilisation combinée des ultrasons et des radiations ultraviolettes pour décomposer notamment des dérivés halogénés en ions chlorures qui restent en solution et qui peuvent être facilement éliminés. Le document US 5 674 389 A décrit un dispositif pour le traitement d'eaux polluées comprenant du tétrachloroéthylène, ledit dispositif comportant une cuve de réception desdites eaux polluées et un système de mise en circulation des eaux polluées entre la cuve de réception jusqu'à une évacuation, en passant à travers une pluralité de colonnes d'adsorption. Le brevet US 4 196 081 se rapporte à un dispositif léger et portable pour obtenir de l'eau potable à partir d'une source d'eau pollué.

Ces procédés permettent une purification de l'eau résiduaire, mais nécessitent tous un enchaînement d'opérations.

L'objet de la présente invention est de proposer un procédé et un dispositif optimisés de traitement de ces eaux usées qui contiennent notamment du PCE à l'état dissous.

Résumé de l'invention

La présente invention concerne un dispositif pour le traitement des eaux de rejet polluées par au moins un solvant de nettoyage d'une machine de nettoyage à sec de vêtements comportant une cuve de réception et de séparation desdites eaux en une phase aqueuse contenant en partie du solvant et une phase solvant en partie basse de la cuve, un système de mise en circulation de la phase aqueuse entre la cuve jusqu'à une évacuation, et au moins une cartouche de matériau adsorbant placée entre le cuve et l'évacuation pour l'absorbation dudit solvant de la phase aqueuse, caractérisé en ce qu'il comprend un capteur du niveau de solvant en partie basse de la cuve, un capteur de niveau de la phase aqueuse en partie haute de ladite cuve et des moyens de suivi de l'état de la cartouche par une mesure de du volume de la phase aqueuse mise en circulation et en ce que ledit système comporte une pompe et des moyens de contrôle des conditions de fonctionnement de ladite pompe de manière que le démarrage de cette pompe soit activé par le capteur de niveau haut et stoppé par l'atteinte d'un niveau bas situé au-dessus de l'interface entre l'eau et le polluant.

Avantageusement, ledit matériau est un adsorbant hydrocarboné hydrophobe.

De préférence, ledit matériau adsorbant a les caractéristiques suivantes:

- une surface spécifique comprise entre 500 et 1500 $m^2$/g,
- un volume microporeux inférieur à 0,3 $cm^3$/g,
- un volume mésoporeux compris entre 0,2 et 2 $cm^3$/g,
- un volume macroporeux compris entre 0,2 et 1 $cm^3$/g.

Et de manière encore plus préférée :

- une surface spécifique comprise entre 750 et 1000 $m^2$/g,
- un volume microporeux inférieur à 0,1 $cm^3$/g,
- un volume mésoporeux compris entre 0,7 et 2 $cm^3$/g,
- un volume macroporeux compris entre 0,5 et 1 $cm^3$/g.

Dans un mode de réalisation, ledit matériau adsorbant est un charbon actif présentant un volume microporeux non nul.

Dans un autre mode de réalisation, ledit matériau adsorbant est une résine polymère macroréticulée, non-ionique, à base notamment de copolymère styrène-divinylbenzène.

Avantageusement, la forme de la cuve est déterminée pour favoriser le refroidissement des eaux à traiter.

L'invention concerne également un procédé de traitement des eaux de rejet d'une machine de nettoyage à sec de vêtements dans lequel on effectue les étapes suivantes :

- on remplit une cuve de réception et de séparation (1) desdites eaux polluées par au moins un solvant de nettoyage,

- on sépare lesdites eaux polluées en une phase aqueuse contenant en partie du solvant et en une phase solvant en partie basse de la cuve et

- on active un système de mise en circulation par pompage de la phase aqueuse entre la cuve jusqu'à une évacuation par un capteur en partie haute de la cuve, ladite phase aqueuse passant à travers d'au moins une cartouche de matériau adsorbant placée entre la cuve et l'évacuation pour l'absorbation dudit solvant de la phase aqueuse,

- on contrôle les conditions de fonctionnement de ladite pompe,

- on effectue un suivi de l'état de la cartouche par une mesure du volume de la phase aqueuse mise en circulation,

- on utilise un capteur du niveau de solvant en fond de la cuve afin de stopper la pompe pour ne pas mettre en circulation ladite phase de solvant.

On peut régler le débit de la pompe en relation avec la vitesse de circulation désirée dans la cartouche.

De préférence, le solvant de nettoyage est un solvant organo-halogéné, notamment un solvant organo-chloré, et de manière très préférée le perchloréthylène.

L'invention concerne notamment l'utilisation du dispositif précédemment décrit pour l'épuration d'effluents industriels contenant des résidus de solvants organo-halogénés.

## Description détaillée de l'invention+

La présente invention sera mieux comprise et ses avantages apparaîtront plus clairement à la lecture de la description qui suit d'un exemple de réalisation, nullement limitatif, illustré par les figures ci-après annexées, parmi lesquelles:

- la figure 1 montre schématiquement le dispositif selon l'invention,

- la figure 2 illustre le système de test des cartouches selon l'invention,

- la figure 3 montre les résultats d'adsorption selon l'invention.

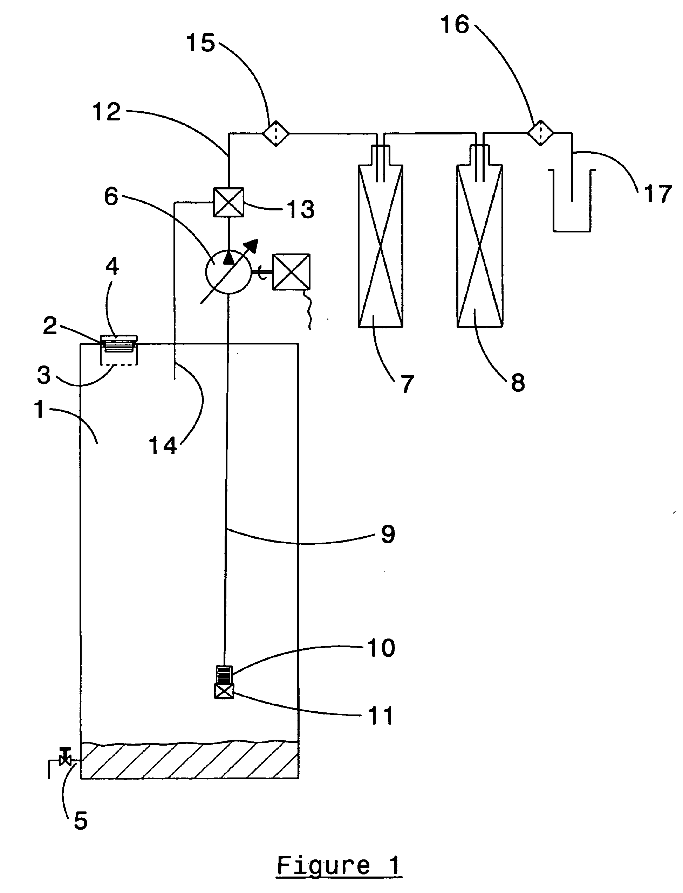

La figure 1 illustre schématiquement le dispositif selon l'invention qui comporte:

- une cuve 1 de traitement comportant un orifice de remplissage 2 comprenant un filtre 3 et un bouchon 4, ainsi qu'un orifice de vidage 5 situé en partie basse de la cuve,

- une pompe 6 qui aspire l'effluent contenu dans la cuve de traitement 1 pour le mettre en circulation, selon la présente invention, dans des cartouches de produits adsorbants 7 et 8,

- une canne d'aspiration 9 comprenant une crépine 10, un capteur de déclenchement de l'aspiration en fonction d'un niveau haut de l'effluent dans la cuve et de l'arrêt de l'aspiration en fonction d'un niveau bas dudit effluent, un capteur 11 de niveau du liquide pollué ayant décanté en fond de cuve,

- une conduite de refoulement 12 comprenant une soupape de décharge de sécurité 13 et son conduit de décharge 14 dans la cuve, un filtre 15 adapté à retenir les fibres et particules en amont des cartouches de piégeage, deux cartouches de piégeage par adsorption 7 et 8 disposées en série dont les matériaux de piégeage sont décrits ci-après, un filtre en aval 16, une canalisation 17 d'évacuation de l'effluent épuré, soit vers un rejet, soit vers un recyclage.

Le perchloréthylène est utilisé dans les pressings pour le nettoyage à sec à l'aide de machines de nettoyage qui possèdent généralement un distillateur en amont de deux séparateurs afin de recycler et réutiliser environ 99% du perchloréthylène. En sortie de ces séparateurs, les « eaux libres » qui y sont générées contiennent encore des traces de perchloréthylène. Ces eaux libres sont évacuées de la machine de nettoyage à l'aide d'une vanne de soutirage. Ces eaux, qui peuvent être assimilées à des rejets, représentent un volume d'environ 5 litres/jour et par machine.

La présente invention a pour objet de collecter ces eaux libres et de les traiter afin de retirer complètement les traces de perchloréthylène pour pouvoir, selon les cas, évacuer à l'égout cette eau ainsi traitée, ou selon les machines, recycler cette eau pour l'utiliser dans le procédé de nettoyage.

La collecte de l'eau libre en sortie des séparateurs peut également s'accompagner de la libération de perchloréthylène quasi-pur si les opérateurs n'ont pas suivi scrupuleusement les instructions du fabricant de la machine de nettoyage à sec.

Pour cette raison, la cuve 1 de traitement est conçue pour collecter par décantation ce surplus de perchloréthylène en partie basse de la cuve afin de le recycler (donc le réutiliser) dans le procédé de nettoyage à sec, après distillation éventuelle dans le distillateur de la machine de nettoyage.

Le procédé selon l'invention peut être décrit comme suit:

- récupération dans une cuve de traitement 1 de solutions aqueuses à température inférieure à 45°C contenant des micro polluants, du type $C_2Cl_4$. Le transfert peut se faire de façon manuelle.

- cette cuve de stockage sert de séparateur entre la phase aqueuse et la phase solvant en permettant à ce mélange de baisser en température et ainsi de diminuer la quantité de $C_2Cl_4$ dissoute dans l'eau. De plus, la cuve permet aussi la décantation des particules ou fibres éventuelles pouvant gêner la rétention des traces de $C_2Cl_4$ sur le média absorbant des cartouches (7, 8).

- la pompe de transfert 6 assure le pompage de l'eau contenant le polluant. Le démarrage de cette pompe est activé par un capteur de niveau haut et stoppé par l'atteinte d'un niveau bas situé au dessus de l'interface entre l'eau et le polluant, par exemple du $C_2Cl_4$, ayant décanté. Une soupape de décharge 13 en sortie de la pompe régule le régime de transfert en limitant les surpressions éventuelles.

- la solution contenant des traces de $C_2Cl_4$ passe par un filtre 15 à particules au refoulement de la pompe pour assurer la protection des cartouches 7 et 8.

- la solution ainsi filtrée percole dans les deux cartouches montées en série (7, 8). Le perchloréthylène se fixe par couches successives sur le matériau contenu dans les cartouches. La deuxième cartouche 8 est en sécurité permettant de fixer les micro traces de $C_2Cl_4$ qui pourraient subsister encore en sortie de la première cartouche 7.

- l'eau ainsi traitée est rejetée à l'égout ou recyclée dans le procédé de nettoyage.

- la pompe de transfert permet d'être réglée à un débit horaire (l/h) compatible avec la capacité de traitement des cartouches 7 et 8.

- la pompe comporte des moyens de mesure et de mémorisation du volume total transféré dans les cartouches afin de contrôler la quantité de solution traitée et de déclencher le changement des cartouches. De préférence, il s'agit du comptage des cycles de pompage de la pompe volumétrique. Une alarme peut être affichée lorsque l'on atteint un volume donné de traitement.

- les moyens de commande de la motorisation de la pompe permettent de connaître le nombre de démarrages effectués ainsi que la durée de fonctionnement.

- le capteur de détection 11 du niveau de polluant dans la cuve 1 permet de stopper la pompe pour éviter de transférer du polluant presque pur dans les cartouches. Un signal d'alerte peut indiquer la nécessité de vidanger la cuve.

- au minimum une fois par an, les filtres et les cartouches sont remplacés par des éléments neufs, de préférence par un organisme agréé et commandité par l'utilisateur pour le traitement dans les filières recommandées.

Le dispositif selon l'invention, utilisable dans les pressings pour traiter les eaux résiduaires, ne nécessite de manière générale pas de matériel de type ATEX.

Selon l'invention, le produit organochloré utilisé dans l'industrie du nettoyage à sec des vêtements est principalement le perchloréthylène. Cependant, d'autres industries, comme par exemple celles touchant au décapage, dégraissage ou nettoyage de pièces métalliques, utilisent aussi d'autres composés organochlorés, comme par exemple, et de manière non limitative, le chlorure de méthylène, le dichloroéthane, le trichloroéthane, le trichloroéthylène, le chloroforme, le tétrachlorure de carbone, ou encore les chlorures de benzène.

Selon le composé organochloré à éliminer, et notamment dans les cas des composés les plus légers et volatils, le dispositif tel que décrit dans l'invention peut nécessiter l'utilisation de composants de type matériel ATEX, afin de respecter la règlementation relative aux atmosphères explosives.

La solubilité de ces solvants dans l'eau est généralement très faible, mais cependant trop élevée pur autoriser un rejet de l'eau sans traitement en raison de la toxicité de ces produits. Afin de mieux dimensionner la quantité de solide adsorbant à utiliser, en fonction du volume d'eau à traiter et de la nature des composés organo-halogénés, on pourra se reporter utilement à l'article de C.L. Yaws et al. (Chemical Engineering - 2005, page 50).

Selon l'invention, le solide adsorbant contenu dans la cartouche de traitement et de purification de l'eau résiduaire contient au moins un adsorbant hydrocarboné hydrophobe.

Par adsorbant hydrocarboné hydrophobe, on entend par exemple un charbon actif, préparé soit par activation physique, soit par activation chimique, par exemple à partir de matière végétale, comme des écorces d'arbres ou des noyaux de fruit, ou minérale, comme le charbon.

Par adsorbant hydrocarboné hydrophobe, on entend également notamment un solide de type résine macroréticulée, à base par exemple d'un copolymère styrène-divinylbenzène. Cette résine est préférentiellement non ionique.

Le solide utilisé est, selon l'invention, un adsorbant hydrophobe hydrocarboné mis en forme préférentiellement sous forme de granulés ou de billes.

La surface spécifique B.E.T., déterminée classiquement par adsorption d'azote à 77 K, est comprise entre 500 et 1500 $m^2/g$, et préférentiellement entre 750 et 1000 $m^2/g$.

Le volume microporeux, déterminé classiquement par adsorption d'azote à 77 K, selon la méthode du t-plot ou selon l'équation de Dubinin-Radushkevich, connues de l'homme de l'art, est inférieur à 0,3 $cm^3/g$, et préférentiellement inférieur à 0,1 $cm^3/g$, et le volume mésoporeux, déterminé également par adsorption d'azote à 77 K, selon la méthode du t-plot ou selon la méthode B.J.H., est compris entre 0,2 et 2,0 $cm^3/g$, et préférentiellement entre 0,7 et 2,0 $cm^3/g$.

Le volume macroporeux, déterminé classiquement par intrusion de mercure, est compris entre 0,2 et 1,0 $cm^3/g$, et préférentiellement entre 0,5 et 1,0 $cm^3/g$.

Selon l'invention, l'adsorbant hydrophobe hydrocarboné peut être un charbon actif présentant notamment un volume microporeux non nul.

Selon l'invention, l'adsorbant hydrophobe hydrocarboné peut être préférentiellement de type résine polymère macroréticulée, non-ionique, à base notamment de copolymère styrène-divinylbenzène. Parmi ce type de solide, on peut citer en exemple, de manière non limitative, les adsorbants XAD-4 ou XAD-16, commercialisés par la société Rohm et Haas, la résine OPT-V503, commercialisée par la société Dow Chemical, ou encore la résine MN-202, commercialisée par la société Purolite.

L'intérêt d'utiliser une résine polymère, par rapport à un charbon actif, provient de sa facilité de régénération, en raison notamment du caractère faiblement microporeux de ces solides.

Typiquement, le volume d'eau résiduaire à traiter peut atteindre 10 litres par jour et par machine, et le plus souvent de 1 à 5 litres, ou de 1 à 3 litres/j.

Le solide est placé dans une cartouche, préférentiellement de géométrie cylindrique, dont le rapport hauteur sur diamètre est typiquement compris entre 2 et 20, et préférentiellement entre 5 et 10.

Le traitement de l'eau peut-être effectué en continu, ou par batch successifs, selon le mode de programmation considéré.

La vitesse superficielle ("fût vide") de passage de l'eau à traiter dans le lit d'adsorbant est préférentiellement comprise entre 0,1 et 20 cm/min.

Le volume d'adsorbant à utiliser dépend du volume d'eau quotidien à traiter et de la durée souhaitée avant le remplacement de la cartouche d'adsorbant. À titre indicatif, on recommande d'utiliser une cartouche dont le volume est compris entre 0,5 et 1 litre, par litre d'eau à traiter quotidiennement, de manière à n'assurer le remplacement de la cartouche qu'une seule fois par an. Ce volume de solide peut naturellement être augmenté ou diminué selon la fréquence de changement de la cartouche envisagée.

Dans une version préférée de l'invention, il est recommandé d'utiliser deux cartouches placées en série, identiques ou non.

Exemples :

L'efficacité de différents solides vis-à-vis de la purification de l'eau par adsorption du perchloroéthylène (PCE) dissous est évaluée par la technique habituelle des courbes de perçage, qui consiste à injecter en continu de l'eau saturée de PCE dans une colonne remplie dudit solide, à débit constant, et à suivre en sortie de la colonne la concentration en PCE en fonction du temps dans l'effluent purifié. La capacité d'adsorption $Q_0$ du solide est déterminée au moment où le perçage du PCE se produit, c'est-à-dire au moment où la concentration de PCE dans l'eau en sortie de colonne n'est plus nulle. La concentration $C_0$ de l'eau saturée en PCE est d'environ 150 mg/l.

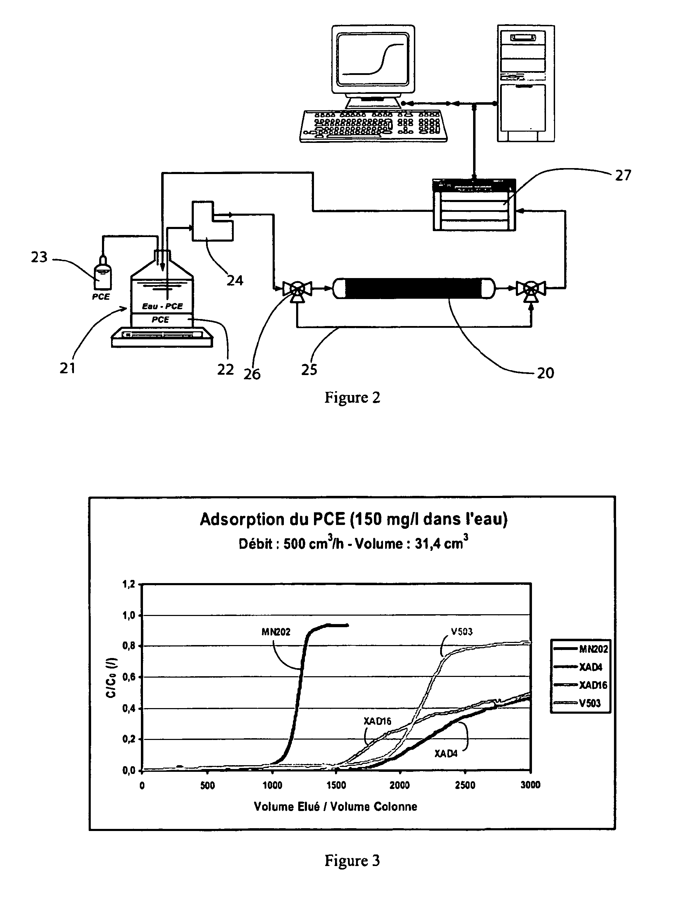

Dans tous les exemples ci-dessous, les tests ont été effectués à l'aide du système illustré figure 2. Les solides sont introduits dans une colonne 20 de longueur 40 cm, et de diamètre interne 1 cm. Préalablement à l'introduction dans la colonne, les solides sont prétraités selon les recommandations du fabricant, et notamment humidifiés afin de s'affranchir de tout phénomène de gonflement ultérieur dans la colonne. Afin de limiter la durée des essais, le débit de charge est fixé à 0,5 l/h, ce qui correspond à une vitesse superficielle de l'eau dans la colonne (fût vide) d'environ 10 cm/min.

On prépare environ 10 litres d'eau dans un récipient fermé 21. La saturation en PCE de cette eau est obtenue en utilisant un excès de PCE 22 (environ 0,5 l) qui décante au fond du récipient (densité du PCE = 1,61). Afin d'éviter toute perte de PCE vers l'atmosphère à la surface de l'eau par un phénomène de "strippage", le volume d'air résiduel dans le récipient est également mis en contact avec du PCE liquide 23 et la tension de vapeur naturelle assure sa saturation, limitant ainsi les pertes.

L'injection de l'eau saturée en PCE dans la colonne est effectuée en continu à l'aide d'un système de deux pousse-seringues 24. Un système de by-pass 25 de la colonne, via une vanne 3-voies 26, permet d'analyser périodiquement et directement la charge envoyée dans la colonne, et de s'assurer de la saturation de l'eau en PCE. Afin de limiter la quantité d'eau pendant l'essai, l'eau purifiée en sortie de colonne est renvoyé, après analyse, dans le récipient de charge pour y être de nouveau saturé en PCE.

L'analyse est effectuée par un détecteur UV-visible 27 (modèle Prostar de Varian) qui mesure en continu la concentration en PCE dans l'effluent en sortie de colonne, et dans la charge de manière périodique. La longueur d'onde retenue pour ces mesures est de 230 nm. La linéarité de la réponse du détecteur en fonction de la concentration en PCE dans l'eau a été vérifiée en réalisant des dilutions successives de la charge et en mesurant le signal UV-visible.

Périodiquement, environ une fois toutes les 4 à 6 heures, la teneur en PCE dans l'eau injectée dans la colonne est mesurée en utilisant le système de by-pass décrit précédemment.

La colonne contenant le solide est initialement remplie d'eau pure. Le temps $t_0$ correspond au moment où la charge est injectée dans la colonne. Une correction est effectuée en prenant en compte le volume des lignes compris entre le bac de charge et l'entrée de la colonne d'une part, et la sortie de la colonne et le détecteur d'autre part. En raison de la durée des essais, il s'avère que cette correction est tout à fait négligeable.

La quantité de PCE adsorbé sur le solide au moment du perçage $Q_0$ (mg/g) est calculée par l'équation suivante :

$$Q_0 = \frac{1}{M_{res}} F t_p . C_0$$

avec :

- $C_0$ : concentration de PCE dans l'eau en entrée de colonne (150 mg/l)

- $M_{res}$ : masse de solide (base "sec") dans la colonne (g)

- F : débit d'injection de la charge dans la colonne (0,5 l/h)

- $t_p$ : temps de perçage du PCE (h)

*Exemple 1:*

On utilise dans cet essai 9,9 g ("base sèche") de résine Purolite MN-202.

Cette résine est caractérisée par :

- une surface spécifique B.E.T. de 876 m$^2$/g
- un volume microporeux de 0,247 cm$^3$/g
- un volume mésoporeux de 0,462 cm$^3$/g
- un volume macroporeux de 0,741 cm$^3$/g

Dans ces conditions, le temps de perçage du PCE est de 60 heures, ce qui conduit à une quantité de PCE adsorbé de 45,4 % en masse par rapport à la résine. Le volume d'eau traitée correspond à 954 volumes de colonne.

*Exemple 2 :*

On utilise dans cet essai 11,2 g ("base sèche") de résine Dow Chemical OPT-V503.

Cette résine est caractérisée par :

- une surface spécifique B.E.T. de 1250 m$^2$/g
- un volume microporeux de 0,293 cm$^3$/g
- un volume mésoporeux de 0,797 cm$^3$/g
- un volume macroporeux de 0,273 cm$^3$/g

Dans ces conditions, le temps de perçage du PCE est de 105 heures, ce qui conduit à une quantité de PCE adsorbé de 70,3 % en masse par rapport à la résine. Le volume d'eau traitée correspond à 1673 volumes de colonne.

*Exemple 3 :*

On utilise dans cet essai 8,3 g ("base sèche") de résine Rohm & Haas XAD-4.

Cette résine est caractérisée par :

- une surface spécifique B.E.T. de 807 m$^2$/g
- un volume microporeux de 0 cm$^3$/g
- un volume mésoporeux de 1,182 cm$^3$/g
- un volume macroporeux de 0,603 cm$^3$/g

Dans ces conditions, le temps de perçage du PCE est de 100 heures, ce qui conduit à une quantité de PCE adsorbé de 90,3 % en masse par rapport à la résine. Le volume d'eau traitée correspond à 1591 volumes de colonne.

*Exemple 4 :*

On utilise dans cet essai 9,6 g ("base sèche") de résine Rohm & Haas XAD-16.

Cette résine est caractérisée par :

- une surface spécifique B.E.T. de 893 m$^2$/g
- un volume microporeux de 0 cm$^3$/g
- un volume mésoporeux de 1,737 cm$^3$/g
- un volume macroporeux de 0,955 cm$^3$/g

Dans ces conditions, le temps de perçage du PCE est de 90 heures, ce qui conduit à une quantité de PCE adsorbé de 70,3 % en masse par rapport à la résine. Le volume d'eau traitée correspond à 1433 volumes de colonne.

La comparaison des courbes de perçage du PCE dissous dans l'eau, sur ces quatre solides, est présentée figure 3. On représente la concentration relative $C/C_0$ (c'est-à-dire rapportée à la concentration constante dans la charge injectée en entrée de la colonne) du PCE en sortie de la colonne dans l'eau purifiée après passage sur le solide adsorbant, en fonction du temps.

Ces résultats montrent que les deux résines possédant un volume microporeux non nul (MN-202 et OPT-V503) donnent des courbes de perçage du PCE en sortie de colonne plus raides que les deux autres résines XAD, ce qui traduit une adsorption plus forte du PCE sur le solide, ce qui conduit inversement à une désorption plus difficile, et donc peut s'avérer moins intéressant pour une utilisation de la résine après régénération. La résine MN-202, qui présente la plus faible capacité d'adsorption, est aussi celle qui possède le volume micro/mésoporeux le plus faible. Les deux résines XAD-4 et XAD-16 donnent des courbes de perçage plus étalées, ce qui traduit une adsorption moins forte et donc une régénération plus facile. Elles présentent également des temps de perçage élevés, ce qui traduit une capacité d'adsorption élevée vis-à-vis du PCE.

**Revendications**

1. Dispositif pour le traitement des eaux de rejet polluées par au moins un solvant de nettoyage d'une machine de nettoyage à sec de vêtements comportant une cuve de réception et de séparation (1) desdites eaux en une phase aqueuse contenant en partie du solvant et une phase solvant en partie basse de la cuve, un système de mise en circulation de la phase aqueuse (6) entre la cuve jusqu'à une évacuation (17), et au moins une cartouche de matériau adsorbant (7, 8) placée entre le cuve et l'évacuation pour l'absorbation dudit solvant de la phase aqueuse, **caractérisé en ce qu'**il comprend un capteur (11) du niveau de solvant en partie basse de la cuve (1), un capteur de niveau de la phase aqueuse en partie haute de ladite cuve, et des moyens de suivi de l'état de la cartouche (7, 8) par une mesure de du volume de la phase aqueuse mise en circulation et **en ce que** ledit système comporte une pompe (6) et des moyens de contrôle des conditions de fonctionnement de ladite pompe de manière que le démarrage de cette pompe soit activé par le capteur de niveau haut et stoppé par l'atteinte d'un niveau bas situé au-dessus de l'interface entre l'eau et le polluant.

2. Dispositif selon la revendication 1" dans lequel ledit matériau est un adsorbant hydrocarboné hydrophobe.

3. Dispositif selon la revendication 2, dans lequel ledit matériau adsorbant a les caractéristiques suivantes:

   - une surface spécifique comprise entre 500 et 1500 m$^2$/g,
   - un volume microporeux inférieur à 0,3 cm$^3$/g,
   - un volume mésoporeux compris entre 0,2 et 2 cm$^3$/g,
   - un volume macroporeux compris entre 0,2 et 1 cm$^3$/g.

4. Dispositif selon la revendication 3, dans lequel ledit matériau adsorbant a les caractéristiques suivantes :

   - une surface spécifique comprise entre 750 et 1000 m$^2$/g,
   - un volume microporeux inférieur à 0,1 cm$^3$/g,
   - un volume mésoporeux compris entre 0,7 et 2 cm$^3$/g,
   - un volume macroporeux compris entre 0,5 et 1 cm$^3$/g.

5. Dispositif selon l'une des revendications 2 à 4, dans lequel ledit matériau adsorbant est un charbon actif présentant un volume microporeux non nul.

6. Dispositif selon l'une des revendications 2 à 4, dans lequel ledit matériau adsorbant est une résine polymère macroréticulée, non-ionique, à base notamment de copolymère styrène-divinylbenzène.

7. Dispositif selon l'une des revendications précédentes, dans lequel la forme de la cuve (1) est déterminée pour favoriser le refroidissement des eaux à traiter.

8. Procédé de traitement des eaux de rejet d'une machine de nettoyage à sec de vêtements dans lequel on effectue les étapes suivantes:

   - on remplit une cuve de réception et de séparation (1) desdites eaux polluées par au moins un solvant de nettoyage,

- on sépare lesdites eaux polluées en une phase aqueuse contenant en partie du solvant et en une phase solvant en partie basse de la cuve et
- on active un système de mise en circulation par pompage de la phase aqueuse entre la cuve jusqu'à une évacuation (17) par un capteur en partie haute de la cuve, ladite phase aqueuse passant à travers d'au moins une cartouche de matériau adsorbant (7, 8) placée entre la cuve et l'évacuation pour l'absorption dudit solvant de la phase aqueuse,
- on contrôle les conditions de fonctionnement de ladite pompe,
- on effectue un suivi de l'état de la cartouche par une mesure du volume de la phase aqueuse mise en circulation,
- on utilise un capteur du niveau (11) de solvant en fond de cuve afin de stopper la pompe pour ne pas mettre en circulation ledit solvant.

9.  Procédé selon la revendication 8, dans lequel on règle le débit de la pompe (6) en relation avec la vitesse de circulation désirée dans la cartouche.

10. Procédé selon l'une des revendications 8 à 9 dans lequel le solvant de nettoyage est un solvant organo-halogéné.

11. Procédé selon la revendication 10 dans lequel le solvant de nettoyage est un solvant organo-chloré.

12. Procédé selon la revendication 10 dans lequel le solvant de nettoyage est le perchloréthylène.

13. Utilisation du dispositif selon l'une des revendications 1 à 7 pour l'épuration d'effluents industriels contenant des résidus de solvants organo-halogénés.

## Patentansprüche

1.  Vorrichtung zur Behandlung von mit mindestens einem Reinigungslösungsmittel einer Trockenreinigungsmaschine für Kleidung verschmutzten Abwassers, welche ein Aufnahme- und Abscheidevolumen (1) für das besagte Abwasser in eine wässrigen Phase, teilweise enthaltend Reinigungslösungsmittel und in eine Lösemittelphase im unteren Teil des Volumens aufweist, ein System zum Zirkulierenlassen der wässrigen Phase (6) im Volumen bis zu einer Entleerung (17), und mindestens eine Kartusche aus Adsorptionsmaterial (7, 8) zur Adsorption des Lösungsmittels aus der wässrigen Phase, die zwischen dem Volumen und der Entleerung angeordnet ist, **dadurch gekennzeichnet, dass** sie einen Sensor (11) für den Lösungsmittelfüllstand im unteren Teil des Volumens (1), einen Füllstandssensor der wässrigen Phase im oberen Teil des Volumens und Mittel zur Überprüfung des Zustands der Kartusche (7, 8) durch eine Messung der Menge der zirkulierenden wässrigen Phase aufweist und dadurch, dass das System eine Pumpe (6) und Mittel zur Überprüfung der Betriebsbedingungen der Pumpe aufweist, so dass das Anlaufen dieser Pumpe durch den Sensor des oberen Füllstands aktiviert wird und durch das Erreichen eines unteren Füllstands, der oberhalb der Schnittstelle zwischen dem Wasser und der Verunreinigung angeordnet ist, gestoppt wird.

2.  Vorrichtung nach Anspruch 1, wobei das Adsorbens-Material ein hydrophober Kohlenwasserstoff ist.

3.  Vorrichtung nach Anspruch 2, wobei das Adsorptionsmaterial folgende Merkmale aufweist:

    - eine spezifische Oberfläche zwischen 500 und 1.500 $m^2/g$,
    - ein mikroporöses Volumen von unter 0,3 $cm^3/g$,
    - ein mesoporöses Volumen zwischen 0,2 und 2 $cm^3/g$,
    - ein makroporöses Volumen zwischen 0,2 und 1 $cm^3/g$.

4.  Vorrichtung nach Anspruch 3, wobei das Adsorbtionsmaterial folgende Merkmale aufweist:

    - eine spezifische Oberfläche zwischen 750 und 1.000 $m^2/g$,
    - ein mikroporöses Volumen von unter 0,1 $cm^3/g$,
    - ein mesoporöses Volumen zwischen 0,7 und 2 $cm^3/g$,
    - ein makroporöses Volumen zwischen 0,5 und 1 $cm^3/g$.

5.  Vorrichtung nach einem der Ansprüche 2 bis 4, wobei das Adsorptionsmaterial Aktivkohle ist, die ein mikroporöses Volumen ungleich Null aufweist.

6.  Vorrichtung nach einem der Ansprüche 2 bis 4, wobei das Adsorptionsmaterial ein nichtionisches makrovernetztes Polymerharz, insbesondere auf Styrol-Divinylbenzol-Copolymer-Basis, ist.

7.  Vorrichtung nach einem der vorhergehenden Ansprüche, wobei die Form des Volumens (1) festgelegt ist, um die Abkühlung des zu behandelnden Wassers zu fördern.

8.  Verfahren zur Behandlung des Abwassers einer Trockenreinigungsmaschine für Kleidung, wobei folgende Schritte durchgeführt werden:

    - man füllt ein Aufnahme- und Abscheidevolumen (1) des verschmutzten Abwassers mit mindestens einem Reinigungslösungsmittel,

- man trennt das verschmutzte Abwasser in eine wässrige Phase, die teilweise das Lösungsmittel enthält, und in eine Lösemittelphase im unteren Teil des Volumens, und
- man aktiviert ein System zum Zirkulierenlassen der wässrigen Phase durch Pumpen zwischen dem Volumen bis zu einer Entleerung (17) mittels eines Sensors im oberen Teil des Volumens, wobei die wässrige Phase durch mindestens eine Kartusche aus Adsorptionsmaterial (7, 8), die zwischen dem Volumen und der Entleerung zur Absorption des Lösungsmittels der wässrigen Phase angeordnet ist,
- man überprüft die Betriebsbedingungen der Pumpe,
- es erfolgt eine Überwachung des Zustands der Kartusche durch eine Messung des Volumens der eingeleiteten wässrigen Phase,
- es wird ein Füllstandssensor (11) für das Lösungsmittel am Boden des Volumens verwendet, um die Pumpe anzuhalten, damit das Lösungsmittel nicht zirkuliert.

9. Verfahren nach Anspruch 8, wobei der Durchfluss der Pumpe (6) in Bezug auf die gewünschte Zirkulationsgeschwindigkeit in der Kartusche eingestellt wird.

10. Verfahren nach einem der Ansprüche 8 bis 9, wobei das Reinigungslösungsmittel ein organo-halogeniertes Lösungsmittel ist.

11. Verfahren nach Anspruch 10, wobei das Reinigungslösungsmittel ein organo-chloriertes Lösungsmittel ist.

12. Verfahren nach Anspruch 10, wobei das Reinigungslösungsmittel Perchlorethylen ist.

13. Verwendung der Vorrichtung nach einem der Ansprüche 1 bis 7 zur Reinigung von industriellem Abwasser, das Rückstände von organohalogenierten Lösungsmitteln enthält.


**Claims**

1. A device for treating wastewater contaminated by at least one cleaning solvent from a garment dry cleaner comprising a tank (1) intended for reception and separation of said water into an aqueous phase containing partly solvent and a solvent phase in the lower part of the tank, a system (6) for circulating the aqueous phase between the tank and an outlet (17), and at least one adsorbent material cartridge (7, 8) arranged between the tank and the outlet for absorption of said solvent of the aqueous phase, **characterized in that** it comprises a solvent level detector (11) in the lower part of tank (1), an aqueous phase level detector in the upper part of said tank, and means for monitoring the state of cartridge (7, 8) by measuring the volume of the circulating aqueous phase, and **in that** said system comprises a pump (6) and means for controlling the operating conditions of said pump so that pump start-up is activated by the high level detector and stopped when a low level located above the interface between the water and the contaminant is reached.

2. A device as claimed in claim 1, wherein said material is a hydrophobic hydrocarbon-containing adsorbent.

3. A device as claimed in claim 2, wherein said adsorbent material has the following characteristics:

   - a specific surface area ranging between 500 and 1500 $m^2/g$,
   - a micropore volume below 0.3 $cm^3/g$,
   - a mesopore volume ranging between 0.2 and 2 $cm^3/g$,
   - a macropore volume ranging between 0.2 and 1 $cm^3/g$.

4. A device as claimed in claim 3, wherein said adsorbent material has the following characteristics:

   - a specific surface area ranging between 750 and 1000 $m^2/g$,
   - a micropore volume below 0.1 $cm^3/g$,
   - a mesopore volume ranging between 0.7 and 2 $cm^3/g$,
   - a macropore volume ranging between 0.5 and 1 $cm^3/g$.

5. A device as claimed in any one of claims 2 to 4, wherein said adsorbent material is activated carbon with non-zero micropore volume.

6. A device as claimed in any one of claims 2 to 4, wherein said adsorbent material is a non-ionic macroreticular polymeric resin, notably based on styrenedivinylbenzene copolymer.

7. A device as claimed in any one of the previous claims, wherein the shape of tank (1) is determined to promote cooling of the water to be treated.

8. A method for treating wastewater from a garment dry cleaner, wherein the following stages are carried out:

   - filling a tank (1) intended for reception and separation of said water contaminated by at least one cleaning solvent,
   - separating said contaminated water into an aqueous phase containing partly solvent and a solvent phase in the lower part of the tank,

- activating a system for circulating through pumping the aqueous phase between the tank and an outlet (17) by means of a detector in the upper part of the tank, said aqueous phase passing through at least one adsorbent material cartridge (7, 8) arranged between the tank and the outlet for absorption of said solvent of the aqueous phase,

- controlling the operating conditions of said pump,

- monitoring the state of the cartridge by measuring the volume of the circulating aqueous phase,

- using a solvent level detector (11) at the bottom of the tank so as to stop the pump in order to prevent circulation of said solvent.

9. A method as claimed in claim 8, wherein the flow rate of pump (6) is adjusted in relation to the desired rate of circulation in the cartridge.

10. A method as claimed in any one of claims 8 and 9, wherein the cleaning solvent is an organohalogenated solvent.

11. A method as claimed in claim 10, wherein the cleaning solvent is an organochlorine solvent.

12. A method as claimed in claim 10, wherein the cleaning solvent is perchloroethylene.

13. Use of the device as claimed in any one of claims 1 to 7 for purification of industrial effluents containing organohalogenated solvent residues.

Figure 1

Figure 2

Figure 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1195185 A1
- US 5637212 A
- US 5525213 A
- WO 9907644 A
- EP 1375432 A1
- US 5674389 A
- US 4196081 A

**Littérature non-brevet citée dans la description**

- **C.L. YAWS et al.** *Chemical Engineering,* 2005, 50